# EUROPÄISCHE PATENTSCHRIFT

(11) **EP 1 179 153 B1**
(45) Veröffentlichungstag und Bekanntmachung des Hinweises auf die Patenterteilung: **10.12.2003**
(21) Anmeldenummer: 00927168.5
(22) Anmeldetag: 09.05.2000
(51) Int. Cl.: F16L 11/15, F16L 27/111

(54) **FLEXIBLE SCHLAUCHLEITUNG, INSBESONDERE UNTER DRUCKEINWIRKUNG EINER VERFORMUNG UNTERLIEGENDE HOCHDRUCKSCHLAUCHLEITUNG**
FLEXIBLE HOSE LINE, IN PARTICULAR, HIGH PRESSURE HOSE LINE WHICH IS SUBJECTED TO A PRESSURISED FORMING PROCESS
FLEXIBLE SOUPLE, EN PARTICULIER FLEXIBLE HAUTE PRESSION SUBISSANT UNE DEFORMATION SOUS L'EFFET DE LA PRESSION

(30) Priorität: 12.05.1999 DE 19921724
(43) Veröffentlichungstag der Anmeldung: 13.02.2002
(73) Patentinhaber: ContiTech Schlauch GmbH, 30165 Hannover (DE)
(72) Erfinder: BESCHE, Anton, D-34497 Korbach (DE); HECKER, Rolf, D-34513 Waldeck-Freienhagen (DE)
(74) Vertreter: Patentanwälte Thömen & Körner
(86) Internationale Anmeldenummer: EP0004127
(87) Internationale Veröffentlichungsnummer: WO00070257

(56) Entgegenhaltungen:
- EP-A- 0 779 417
- EP-A- 0 974 741
- GB-A- 1 506 776
- US-A- 3 420 553
- US-A- 5 813 438

## Beschreibung

Die Erfindung betrifft eine flexible Schlauchleitung, insbesondere unter Druckeinwirkung einer Verformung unterliegende Hochdruckschlauchleitung, vorzugsweise für wechselnde Druckbeanspruchung, und ein Verfahren zur Herstellung derartiger Schlauchleitungen gemäß Oberbegriff der Ansprüche 1 und 12.

Aus der GB-A-1506776 ist eine flexible, rohrförmige Struktur zur Weiterleitung eines Fluids bekannt. Die Struktur besteht aus einer inneren, rohrförmigen, mit Riffelungen in Form von Vertiefungen und Erhebungen, versehenen Schicht, die aus einem deformierbaren Material besteht und für das Fluid undurchlässig ist, einer rohrförmigen Füllschicht aus einem deformierbaren Material, mit dem sich die Vertiefungen auffüllen und die Erhebungen mit einer vorgegebenen Materialdicke bedecken lassen, und einer äußeren, rohrförmigen Verstärkungsschicht um die Füllschicht, welche aus Gruppen von miteinander verflochtenen Textilgespinsten oder Metalldrähten aufgebaut ist. Die Verstärkungsschicht ist in axialer Richtung mit der darunter liegenden Füllschicht in der Weise fest verbunden, dass eine Verschiebung in axialer Richtung zwischen diesen beiden Schichten insoweit begrenzt wird, dass Verschiebungen in axialer Richtung, die zu einem Gleiten der beiden Schichten gegeneinander führen würden, vermieden wird, eine geringe Verschiebung jedoch möglich ist.

Aus der DE 197 28 383 A1 ist eine flexible Schlauchleitung für Hochdruckmedien bekannt, die aus einem ring- oder schraubengangförmig gewellten Metallschlauch besteht, mit einem rohrförmigen Anschlusselement verbunden ist und mit einem die Schlauchleitung und das Anschlusselement an ihrer Außenseite umgebenden Schutzschlauch aus elastisch nachgiebigem Material versehen ist. Der Schutzschlauch weist dabei im Bereich der endständigen, dem Anschlusselement benachbarten Wellen radial nach innen gerichtete Einformungen auf, die in die Wellentäler der Wellen des Metallschlauchs eingreifen.

Mit einer solchen Lösung wird der Übergangsbereich zwischen Metallschlauch und Anschlusselement belastbarer ausgeführt.

Der Erfindung liegt die Aufgabe zugrunde, eine Schlauchleitung zu entwickeln, die hohen Drücken ausgesetzt werden kann und insbesondere einer Druckwechselbelastung über einen vergleichsweise langen Zeitraum standhält.

Erfindungsgemäß wird diese Aufgabe gelöst durch eine Innenschicht, die eine zumindest in Schlauchlängsrichtung elastisch beanspruchbare Profilierung aufweist, durch eine Verstärkungsschicht, die zur Aufnahme von in Schlauchlängsrichtung wirkenden Zugkräften ausgebildet ist, durch eine zwischen der Innenschicht und der Verstärkungsschicht angeordnete, dem Ausgleich der Relativbewegung dieser Schichten zueinander und der radialen Abstützung der Innenschicht auf der Verstärkungsschicht dienende Ausgleichszone und durch Verbindungsbereiche der Innenschicht mit der Verstärkungsschicht, wobei die Innenschicht von einem axial elastisch vorspannbaren Körper gebildet ist, der in vorgespanntem Zustand Bestandteil der Schlauchleitung ist. Die Vorspannung wird zweckmäßig derart gewählt, dass auch bei größtmöglicher Druckamplitude eine gewisse Vorspannung verbleibt, um die Materialermüdung auch bei längerem Gebrauch und hohen Impulswechselraten gering zu halten.

Die Erfindung ist mit dem Vorteil verbunden, dass bei weitgehender Flexibilität der Schlauchleitung diese einer hohen Druckbeaufschlagung, insbesondere einer Druckwechselbeanspruchung auch großer Amplitude, ausgesetzt werden kann. Eine solche Möglichkeit resultiert aus der an sich hohen Flexibilität der Innenschicht, die durch die Verstärkungsschicht in Verbindung mit der Ausgleichszone druckabhängig reduziert wird.

Unter Druckbeaufschlagung kommt es insbesondere zu einer durch die Verstärkungsschicht derart begrenzten Form- und Lageänderung der Innenschicht, dass von der Verstärkungsschicht sowohl eine der axialen Dehnung der Innenschicht entgegenwirkende Kraft als auch gleichzeitig eine über die Ausgleichszone vermittelte radial nach innen gerichtete Reaktionskraft ausgeht. Die Ausgleichszone dient dabei der weitgehend gleichmäßigen Aufnahme und Verteilung der von der Innenschicht ausgehenden Kräfte.

In weiterer Ausgestaltung der Erfindung ist jeder Verbindungsbereich als direkter form- und/oder kraftschlüssiger Kontakt der Innenschicht mit der Verstärkungsschicht ausgebildet.

In bevorzugter Ausführung der Erfindung ist die Profilierung der Innenschicht wellrohrähnlich ausgebildet. Bei der Innenschicht kann es sich auch um ein Wellrohr handeln, das eine Längenänderung bei nur geringer Materialbeanspruchung zulässt.

Für spezielle Anwendungsfälle, wie beispielsweise den Einsatz der Schlauchleitung für umweltbelastende Medien, kann die Innenschicht hochgradig gasundurchlässig ausgebildet sein, was vorzugsweise erreicht wird, in dem die Innenschicht aus einem metallischen Werkstoff besteht.

Gemäß einer weiteren Ausführungsform der Erfindung ist die Verstärkungsschicht aus einem Geflecht gebildet, bei dem die Fäden des Geflechtes eine axiale Orientierung aufweisen und der bevorzugte Geflechtswinkel α, bezogen auf die Schlauchlängsachse, 50° nicht übersteigt und zweckmäßig im Bereich zwischen 35° und 45° liegt.

Um die von der Innenschicht ausgehende Kraft gleichmäßig in dem, aus der Innenschicht, der Ausgleichszone, der Verstärkungsschicht und den Verbindungsbereichen gebildeten Stützkörper zu verteilen, ist die Ausgleichszone bevorzugt aus einem Elastomer, einem thermoplastischen Elastomer oder einem Thermoplast gebildet. Eine weitere günstige Verteilung der in das Gesamtsystem eingeleiteten Kräfte wird erreicht, indem die Ausgleichszone in die Profilierung der Innenschicht, zumindest in den Verbindungsbereichen, eintaucht oder diese ausfüllt.

Ein erfindungsgemäßes Verfahren zur Herstellung einer flexiblen Schlauchleitung besteht darin, dass die Innenschicht und/oder die Verstärkungsschicht mit einer auf der jeweiligen Schicht haftenden Ausgleichszone versehen werden, dass die Innen schicht und die Verstärkungsschicht durch Relativverschiebung in die erforderliche Lage zueinander gebracht werden, wobei die Innenschicht in Längsrichtung der Schlauchleitung vorgespannt wird, bevor die Verbindung von Innenschicht und Verstärkungsschicht im Bereich der Schlaucharmaturen erfolgt.

Eine kraft- und/oder formschlüssige Verbindung zwischen der Innenschicht und der Verstärkungsschicht kann zweckmäßig durch radiale Krafteinwirkung auf ein die Verstärkungsschicht umhüllendes Bauteil hergestellt werden.

Die Erfindung soll nachfolgend anhand eines Ausführungsbeispiels und zugehöriger Zeichnungen näher erläutert werden.

Es zeigen
- Fig. 1: einen Schlauchleitungsbereich, teilweise im Schnitt,
- Fig. 2: einen Schlauchabschnitt mit freigelegter Verstärkungsschicht und
- Fig. 3: einen Schlauchleitungsbereich mit gegenüber Figur 1 geändertem Verbindungsbereich von Innenschicht und Verstärkungsschicht.

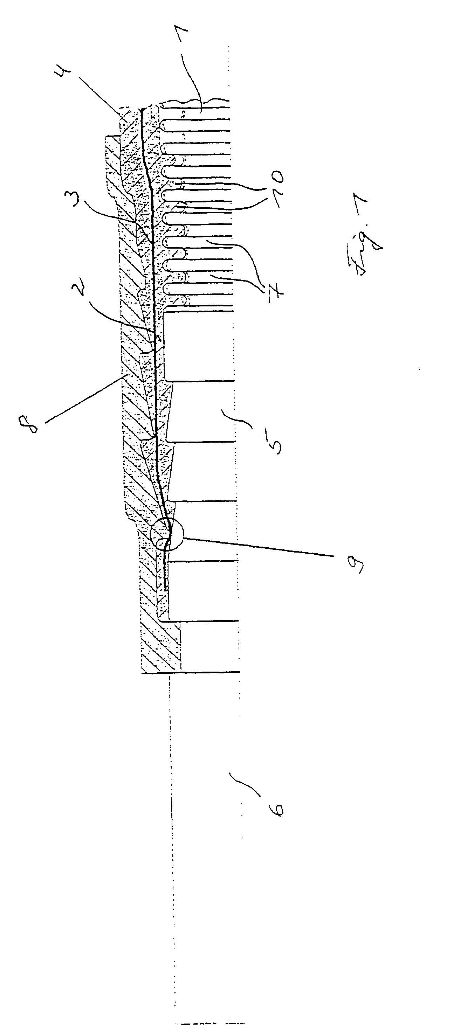

Der in Figur 1 in seinem Endbereich dargestellte Schlauch besteht aus einer metallischen Innenschicht 1, einer elastomeren Ausgleichszone 2, einer als Geflecht ausgeführten Verstärkungsschicht 3 und einer elastomeren Außenschicht 4.

Die wellrohrartig ausgeformte Innenschicht 1 ist schlauchendseitig starr mit einem, am Außenumfang eine sägezahnförmige Kontur aufweisenden Anschlußstück 5 verbunden, das in einen hohlzylindrischen Verbindungsstutzen 6 übergeht. Das Anschlußstück 5 und der dem Anschlußstück 5 benachbarte Bereich 7 der Innenschicht 1 sowie die sich radial nach außen anschließenden Abschnitte der Ausgleichszone 2, der Verstärkungsschicht 3 und der Außenschicht 4 sind von einer Fassung 8 umgeben.

Die Fassung 8 wird im Ergebnis radialer Krafteinwirkung derart verformt, daß auf dem Anschlußstück 5 ein direkter form- und/oder kraftschlüssiger Kontakt der Innenschicht 1 mit der Verstärkungsschicht 3 hergestellt ist und ein Verbindungsbereich 9 entsteht, aus dem die Ausgleichszone 2 infolge der radialen Krafteinwirkung verdrängt worden ist. Des weiteren kommt es zu einem Formschluß zwischen der innenschicht 1 und der in die Vertiefungen der Profilierung der Innenschicht 1 eindringenden Segmente 10 der Ausgleichszone 2.

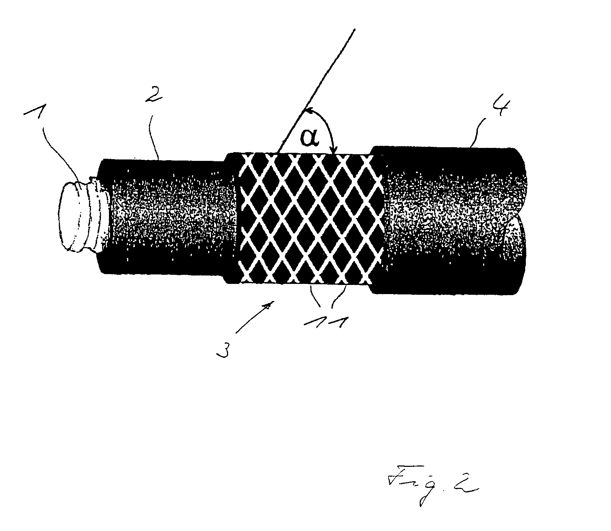

Das Geflecht der Verstärkungsschicht 3 ist aus Fäden oder Fadengruppen 11 aufgebaut, die - wie aus Figur 2 erkennbar - axial orientiert, d. h. , in Schlauchlängsrichtung belastbar sind und unter einem Geflechtswinkel α von vorzugsweise 35° bis 45 ° verlaufen.

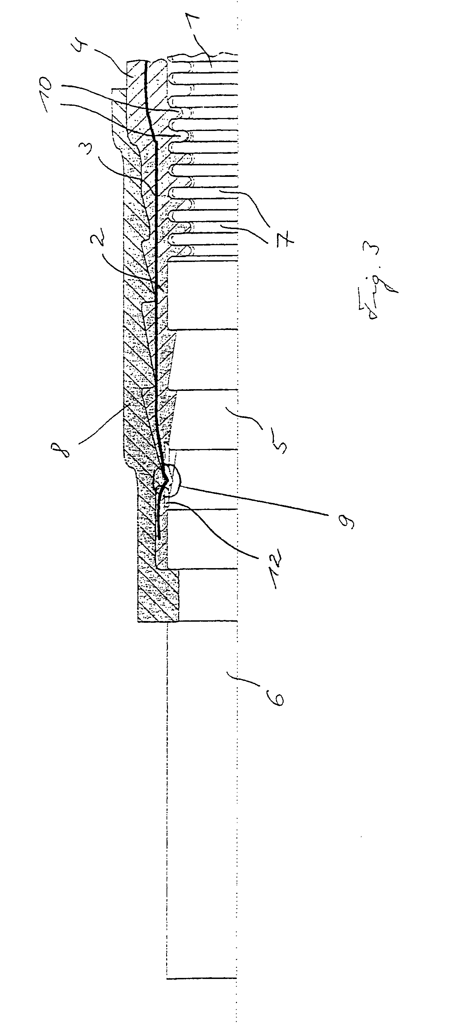

Im Verbindungsbereich 9 kann - wie in Figur 3 dargestellt - ein Stützring 12 vorgesehen sein, über den der radiale Abstand der Verstärkungsschicht 3 im Verbindungsbereich 9 festgelegt wird. Auch besteht die Möglichkeit über einen solchen Stützring 12 bei geeigneter Materialauswahl den Formschluß im Verbindungsbereich 9 zu erhöhen, indem das Geflecht der Verstärkungsschicht 3 in den Stützring 12 zumindest teilweise radial eingedrückt wird und daher axial belastbar ist.

Zur Herstellung der Schlauchleitung werden die wellrohrartig ausgeformte metallische Innenschicht 1 und der - aus Ausgleichszone 2, Verstärkungsschicht 3 und Außenschicht 4 gebildete - Verbundkörper relativ zueinander in Position gebracht, so daß die Innenschicht 1 vom Verbundkörper umhüllt wird. Daraufhin werden die Fassungen 8 in den Verbindungsbereichen 9 von Innenschicht 1 und Verstärkungsschicht 3 angeordnet, wonach die Innenschicht 1 axial vorgespannt und im vorgespannten Zustand durch radiale, gegebenenfalls auch durch axiale, Krafteinwirkung auf die Fassungen 8 mit der Verstärkungsschicht 3 verbunden und somit fixiert wird.

## Patentansprüche

1. Flexible Schlauchleitung, insbesondere unter Druckeinwirkung einer Verformung unterliegende Hochdruckschlauchleitung, vorzugsweise für wechselnde Druckbeanspruchung, bestehend aus einer Innenschicht (1), die eine zumindest in Schlauchlängsrichtung elastisch beanspruchbare Profilierung aufweist, aus einer Verstärkungsschicht (3), die zur Aufnahme von in Schlauchlängsrichtung wirkenden Zugkräften ausgebildet ist, aus einer zwischen der Innenschicht (1) und der Verstärkungsschicht (3) angeordneten, dem Ausgleich der Relativbewegung dieser Schichten zueinander und der radialen Abstützung der Innenschicht (1) auf der Verstärkungsschicht (3) dienenden Ausgleichszone (2) und aus Verbindungsbereichen (9) der Innenschicht (1) mit der Verstärkungsschicht (3), **dadurch gekennzeichnet, dass** die Innenschicht (1) von einem axial elastisch vorspannbaren Körper gebildet ist, der in vorgespanntem Zustand Bestandteil der Schlauchleitung ist.

2. Flexible Schlauchleitung nach Anspruch 1, **dadurch gekennzeichnet, dass** jeder Verbindungsbereich (9) als direkter form- und/oder kraftschlüssiger Kontakt der Innenschicht (1) mit der Verstärkungsschicht (3) ausgebildet ist.

3. Flexible Schlauchleitung nach Anspruch 1 oder 2, **dadurch gekennzeichnet, dass** die Profilierung der Innenschicht (1) wellrohrähnlich ausgebildet ist.

4. Flexible Schlauchleitung nach einem der Ansprüche 1 bis 3, **dadurch gekennzeichnet, dass** es sich bei der Innenschicht (1) um ein Wellrohr handelt.

5. Flexible Schlauchleitung nach Anspruch 1, **dadurch gekennzeichnet, dass** die Innenschicht (1) hochgradig gasundurchlässig ausgeführt ist.

6. Flexible Schlauchleitung nach Anspruch 5, **dadurch gekennzeichnet, dass** die Innenschicht (1) aus einem metallischen Werkstoff besteht.

7. Flexible Schlauchleitung nach Anspruch 1, **dadurch gekennzeichnet, dass** die Verstärkungsschicht (3) aus einem Geflecht gebildet ist.

8. Flexible Schlauchleitung nach Anspruch 7, **dadurch gekennzeichnet, dass** die Fäden des Geflechtes eine axiale Orientierung aufweisen und der Geflechtswinkel α, bezogen auf die Schlauchlängsachse, 50° nicht übersteigt.

9. Flexible Schlauchleitung nach Anspruch 8, **dadurch gekennzeichnet, dass** der Geflechtswinkel α, bezogen auf die Schlauchlängsachse, im Bereich zwischen 35° und 45° liegt.

10. Flexible Schlauchleitung nach Anspruch 1, **dadurch gekennzeichnet, dass** die Ausgleichszone (2) aus einem Elastomer, einem thermoplastischen Elastomer oder einem Thermoplast gebildet ist.

11. Flexible Schlauchleitung nach Anspruch 10, **dadurch gekennzeichnet, dass** die Ausgleichszone (2) in die Profilierung der Innenschicht (1), zumindest in den Verbindungsbereichen (9), eintaucht oder diese ausfüllt.

12. Verfahren zur Herstellung einer flexiblen Schlauchleitung, bei dem eine Innenschicht (1) mit weiteren die Innenschicht (1) umhüllenden Schichten verbunden wird, von denen mindestens eine als Verstärkungsschicht (3) ausgebildet ist, dass die Innenschicht (1) und/oder die Verstärkungsschicht (3) mit einer auf der jeweiligen Schicht haftenden Ausgleichszone (2) versehen werden, dass die Innenschicht (1) und die Verstärkungsschicht (3) durch Relativverschiebung in die erforderliche Lage zueinander gebracht werden, **dadurch gekennzeichnet, dass** die Innenschicht (1) in Längsrichtung der Schlauchleitung vorgespannt wird, bevor die Innenschicht (1) mit der Verstärkungsschicht (3) im Bereich der Schlaucharmaturen verbunden wird.

13. Verfahren nach Anspruch 12, **dadurch gekennzeichnet, dass** eine direkte kraftund/oder formschlüssige Verbindung zwischen der Innenschicht (1) und der Verstärkungsschicht (3) durch radiale Krafteinwirkung auf ein die Verstärkungsschicht (3) umhüllendes Bauteil (8) hergestellt wird.

## Claims

1. Flexible hose line, particularly a high pressure hose line subject to deformation under pressure action, preferably for varying pressure loads, comprising an inner layer (1), which has a profiling elastically stressable at least in the hose longitudinal direction, a reinforcing layer (3), which is constructed for absorbing tensile forces acting in the hose longitudinal direction, a compensating zone (2) located between the inner layer (1) and reinforcing layer (3) and serving to compensate the relative mutual movement of said layers and the radial supporting of the inner layer (1) on the reinforcing layer (3), and an area (9) for connecting the inner layer (1) to the reinforcing layer (3), **characterized in that** the inner layer (1) is formed by an axially elastically pretensionable body, which in the pretensioned state is part of the hose line.

2. Flexible hose line according to claim 1, **characterized in that** each connecting area (9) is constructed as a direct positive and/or non-positive contact between the inner layer (1) and the reinforcing layer (3).

3. Flexible hose line according to claim 1 or 2, **characterized in that** the profiling of the inner layer (1) is constructed in corrugated tube-like manner.

4. Flexible hose line according to one of the claims 1 to 3, **characterized in that** the inner layer (1) is a corrugated tube.

5. Flexible hose line according to claim 1, **characterized in that** the inner layer (1) is to a high degree gastight.

6. Flexible hose line according to claim 5, **characterized in that** the inner layer (1) is made from a metallic material.

7. Flexible hose line according to claim 1, **characterized in that** the reinforcing layer (3) is formed by a braid.

8. Flexible hose line according to claim 7, **characterized in that** the filaments of the braid have an axial orientation and the braid angle α, based on the hose longitudinal axis, does not exceed 50°.

9. Flexible hose line according to claim 8, **characterized in that** the braid angle α, based on the hose longitudinal axis, is in the range between 35° and 45°.

10. Flexible hose line according to claim 1, **characterized in that** the compensating zone (2) is formed by an elastomer, a thermoplastic elastomer or a thermoplastic material.

11. Flexible hose line according to claim 10, **characterized in that** the compensating zone (2) is immersed in or fills the profiling of the inner layer (1), at least in the connecting areas (9).

12. Method for the manufacture of a flexible hose line, in which an inner layer (1) is connected to further layers enveloping said inner layer (1), whereof at least one is constructed as a reinforcing layer (3), the inner layer (1) and/or the reinforcing layer (3) is provided with a compensating zone (2) adhering to the particular layer, the inner layer (1) and the reinforcing layer (3) are brought into the necessary mutual position by relative displacement, **characterized in that** the inner layer (1) is pretensioned in the longitudinal direction of the hose line before the inner layer (1) is connected to the reinforcing layer (3) in the vicinity of the hose fittings.

13. Method according to claim 12, **characterized in that** a direct positive and/or non-positive connection is brought about between the inner layer (1) and the reinforcing layer (3) by radial force action on a component (8) enveloping the reinforcing layer (3).

## Revendications

1. Conduite souple, en particulier conduite souple à hautes pressions subissant une déformation sous l'effet de pression, destinée de préférence pour une sollicitation en compression variable, constituée d'une couche intérieure (1) qui présente, au moins dans le sens longitudinal de la conduite, un profilage pouvant supporter une sollicitation élastique, d'une couche de renfort (3), qui est conçue de manière à absorber des forces de traction agissant dans le sens longitudinal de la conduite, d'une zone de compensation (2), disposée entre la couche intérieure (1) et la couche de renfort (3), servant à compenser le mouvement relatif de ces couches, l'une par rapport à l'autre, ainsi qu'à l'appui radial de la couche intérieure (1) sur la couche de renfort (3), et de zones de liaison (9) entre la couche intérieure (1) et la couche de renfort (3), **caractérisée en ce que** la couche intérieure (1) est formée par un corps pouvant être précontraint élastiquement, dans le sens axial, et qui, en état précontraint, fait partie intégrante de la conduite souple.

2. Conduite souple suivant la revendication 1, **caractérisée en ce que** chaque zone de liaison (9) est formée comme contact mécanique direct et/ou contact entraîné par adhérence entre la couche intérieure (1) et la couche de renfort (3).

3. Conduite souple suivant la revendication 1 ou 2, **caractérisée en ce que** le profilage de la couche intérieure (1) est en forme de tube ondulé.

4. Conduite souple suivant l'une des revendications 1 à 3, **caractérisée en ce que** la couche intérieure (1) est un tube ondulé.

5. Conduite souple suivant la revendication 1, **caractérisée en ce que** la couche intérieure (1) est fabriquée imperméable au gaz à un haut degré.

6. Conduite souple suivant la revendication 5, **caractérisée en ce que** la couche intérieure (1) est en un matériau métallique.

7. Conduite souple suivant la revendication 1, **caractérisée en ce que** la couche de renfort (3) est formée par une tresse.

8. Conduite souple suivant la revendication 7, **caractérisée en ce que** les fils de la tresse présentent une orientation axiale et que l'angle de tressage α par rapport à l'axe longitudinal de la conduite, ne dépasse pas 50°.

9. Conduite souple suivant la revendication 8, **caractérisée en ce que** l'angle de tressage α, par rapport à l'axe longitudinal de la conduite, se situe dans la plage entre 35° et 45°.

10. Conduite souple suivant la revendication 1, **caractérisée en ce que** la zone de compensation (2) est formée dans un élastomère ou dans un élastomère thermoplastique ou dans une matière thermoplastique.

11. Conduite souple suivant la revendication 10, **caractérisée en ce que** la zone de compensation (2) plonge dans le profilage (1) ou remplit celui-ci, au moins dans les zones de liaison (9).

12. Procédé de fabrication d'une conduite souple, suivant lequel une couche intérieure (1) est reliée à d'autres couches entourant la couche intérieure (1), dont au moins une est conçue comme couche de renfort (3), que la couche intérieure (1) et/ou la couche de renfort (3) sont pourvues d'une zone de compensation (2) adhérente sur la couche respective, que la couche intérieure (1) et la couche de renfort (3) sont positionnées, par déplacement relatif, dans la position nécessaire l'une par rapport à l'autre, **caractérisé en ce que** la couche intérieure (1) est précontrainte dans le sens de la longueur de la conduite, avant de relier la couche intérieure (1) à la couche de renfort (3) au niveau des raccords pour conduites souples.

13. Procédé suivant la revendication 12, **caractérisé en ce qu'**une liaison directe mécanique et/ou entraînée par adhérence est réalisée entre la couche intérieure (1) et la couche de renfort (3) sous l'effet d'une force radiale agissant sur un composant (8) entourant la couche de renfort (3).
